(19) **Europäisches Patentamt / European Patent Office / Office européen des brevets**

(11) **EP 3 572 241 B1**

(12) ## EUROPEAN PATENT SPECIFICATION

(45) Date of publication and mention of the grant of the patent:
**24.12.2025 Bulletin 2025/52**

(21) Application number: **18748385.4**

(22) Date of filing: **29.01.2018**

(51) International Patent Classification (IPC):
**B60C 19/00** (2006.01)   **B60C 5/00** (2006.01)
**B60C 1/00** (2006.01)   **B60C 9/18** (2006.01)
**B60C 11/00** (2006.01)

(52) Cooperative Patent Classification (CPC):
**B60C 19/002; B60C 1/0016; B60C 9/18**

(86) International application number:
**PCT/JP2018/002752**

(87) International publication number:
**WO 2018/143127 (09.08.2018 Gazette 2018/32)**

(54) **PNEUMATIC TIRE**

LUFTREIFEN

PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.02.2017 JP 2017019733**

(43) Date of publication of application:
**27.11.2019 Bulletin 2019/48**

(73) Proprietor: **Sumitomo Rubber Industries, Ltd.**
**Kobe-shi, Hyogo 651-0072 (JP)**

(72) Inventors:
- **NAKATANI, Masako**
  **Kobe-shi**
  **Hyogo 651-0072 (JP)**
- **KAWACHI, Takahiro**
  **Kobe-shi**
  **Hyogo 651-0072 (JP)**
- **YAMADA, Ayuko**
  **Kobe-shi**
  **Hyogo 651-0072 (JP)**
- **OKABE, Noboru**
  **Kobe-shi**
  **Hyogo 651-0072 (JP)**

- **TAKAGI, Keiji**
  **Kobe-shi**
  **Hyogo 651-0072 (JP)**
- **MAEKAWA, Natsuki**
  **Kobe-shi**
  **Hyogo 651-0072 (JP)**
- **HAMAMURA, Kenji**
  **Kobe-shi**
  **Hyogo 651-0072 (JP)**
- **TOYA, Subaru**
  **Kobe-shi**
  **Hyogo 651-0072 (JP)**

(74) Representative: **Manitz Finsterwald**
**Patent- und Rechtsanwaltspartnerschaft mbB**
**Martin-Greif-Straße 1**
**80336 München (DE)**

(56) References cited:
| | |
|---|---|
| EP-A1- 0 620 129 | EP-A1- 3 431 309 |
| WO-A1-2008/062673 | WO-A1-2008/062673 |
| WO-A1-2014/002242 | WO-A1-2014/178174 |
| WO-A1-2016/075668 | JP-A- 2016 055 439 |
| JP-A- H06 297 909 | JP-A- H06 297 909 |
| JP-A- H07 144 508 | JP-A- H07 144 508 |
| US-A- 4 739 811 | US-A1- 2010 038 005 |
| US-A1- 2016 023 514 | |

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

### Technical Field

The present invention relates to a pneumatic tyre provided with a noise damper on an inner cavity surface of a tread portion.

### Background Art

conventionally, as a technique for suppressing running noise of a pneumatic tyre, a pneumatic tyre has been known in which a noise damper made of a sponge material is arranged on the inner cavity surface of the tread portion, as disclosed in JP 4960626 B2.

EP 3 431 309 A1 discloses a tire having a carcass, a damping rubber body disposed radially inside of a tread portion, and a porous noise damper composed of two parts and arranged on an inner cavity surface of the tread portion. A tire having a sponge member disposed in a cavity of the tire is disclosed in US 2010/0038005 A1. JP H07-144508 A discloses a tire having a tread reinforcing layer with a vibration proof rubber layer therein. similarly, EP 0 620 129 A1 discloses that a harder rubber layer compared with a topping rubber may be interposed between a belt and a carcass of a tire.

on the other hand, as a repair method when a pneumatic tyre is punctured, a method of sealing the punctured hole by spreading puncture repair liquid including a puncture sealing agent on the inner cavity surface is known.

However, when the puncture repair liquid is used for repairing the puncture of the pneumatic tyre provided with the noise damper as disclosed in JP 4960626 B2, the puncture repair liquid is absorbed in pores of the noise damper, therefore, a lot of the puncture repair liquid is required.

## summary of the Invention

### Problems to be solved by the Invention

The present invention was made in view of the above, and a primary object thereof is to provide a pneumatic tyre capable of being repaired with a small amount of the puncture repair liquid while suppressing the running noise.

### Means for solving the Problem

The invention is defined by the independent claim. Advantageous embodiments are described by the dependent claims.

### Advantageous Effects of the Invention

According to the pneumatic tyre of the present invention, since the noise damper is arranged on the inner cavity surface of the tread portion, cavity resonance in a tyre inner cavity is suppressed, therefore, the running noise of the pneumatic tyre is decreased. In the present invention, since the air permeability of the noise damper measured according to the Japanese Industrial standard JIS-L1096 is set to be 3.0 cm3/cm2/s or less, the absorption of the puncture repair liquid by the noise damper is suppressed, therefore, it is possible that puncture repair is performed with a small amount of puncture repair liquid.

on the other hand, according to the present invention, since the air permeability of the noise damper is limited as described above, it is possible that the effect of suppressing the cavity resonance is decreased as compared with a pneumatic tyre on which the noise damper having higher air permeability is arranged. However, in the present invention, the damping rubber body, which has the width w1 in the tyre axial direction in the range of from 60% to 130% of the width w2 in the tyre axial direction of the belt layer, is disposed inside the tread portion. The damping rubber body configured as such contributes to the decrease of the running noise particularly around 160 Hz. Thereby, it is possible that the puncture repair of the pneumatic tyre is performed with a small amount of the puncture repair liquid while effectively suppressing the running noise.

### Brief Description of the Drawings

[Fig. 1] a cross-sectional view of a pneumatic tyre as an embodiment of the present invention.

[Fig. 2] a cross-sectional view of the pneumatic tyre of Fig. 1 after puncture repair.
[Fig. 3] a cross-sectional view of a pneumatic tyre as another embodiment of the present invention.
[Fig. 4] a cross-sectional view of a pneumatic tyre as another embodiment of the present invention.

## Description of the Preferred Embodiment

An embodiment of the present invention will now be described in conjunction with accompanying drawings.

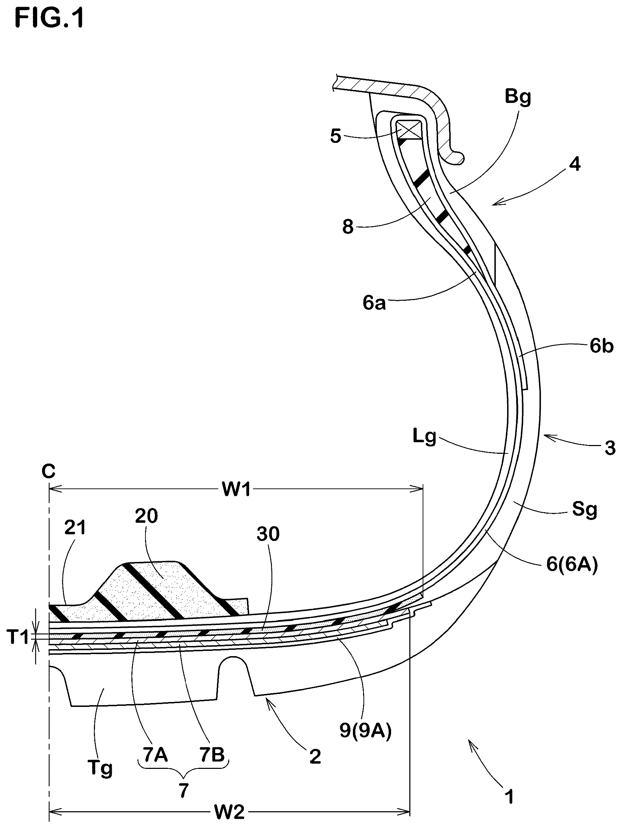

Fig. 1 is a meridian section passing through a tyre rotational axis of a pneumatic tyre 1 in this embodiment in a standard state. The standard state is a state in which the tyre is mounted on a standard rim RM, inflated to a standard inner pressure, and loaded with no tyre load. Hereinafter, dimensions and the like of various parts of the tyre are those measured under the standard state, unless otherwise noted.
The "standard rim" is a wheel rim specified for the concerned tyre by a standard included in a standardization system on which the tyre is based, for example, the "normal wheel rim" in JATMA, "Design Rim" in TRA, and "Measuring Rim" in ETRTO.
The "standard pressure" is air pressure specified for the concerned tyre by a standard included in a standardization system on which the tyre is based, for example, the "maximum air pressure" in JATMA, maximum value listed in the "TIRE LOAD LIMITS AT VARIOUS COLD INFLATION PRESSURES" table in TRA, and "INFLATION PRESSURE" in ETRTO. when the tyre is for a passenger car, it is set to 200 kPa uniformly in consideration of the actual use frequency and the like.
As shown in Fig. 1, the pneumatic tyre (hereinafter may be simply referred to as "tyre") 1 in this embodiment is provided with a carcass 6 extending between bead cores 5 of bead portions 4 via a tread portion 2 and sidewall portions 3, and a belt layer 7 arranged on an outer side in a tyre radial direction of the carcass 6 and inside the tread portion 2. In this embodiment, a tyre for a passenger car is shown as the tyre 1.
The carcass 6 is formed by a single carcass ply 6A, for example. The carcass ply 6A includes a main body portion (6a) extending between the bead cores 5 and turned up portions (6b) each being turned up around respective one of the bead cores 5 from inside to outside in a tyre axial direction so as to be engaged with the respective one of the bead cores 5. In the carcass ply 6A, organic fiber cords made of an organic material such as aromatic polyamide and rayon are used as carcass cords, for example. The carcass cords are arranged at an angle in a range of from 70 to 90 degrees with respect to a tyre equator (C), for example. The carcass ply 6A is formed by a plurality of the carcass cords covered with topping rubber. Between the main body portion 6a and each of the turned up portions 6b, a bead apex rubber 8 extending radially outwardly from respective one of the bead cores 5 in a tapered manner is arranged.
On an outer side of the carcass 6, a tread rubber (Tg) for forming a ground contacting surface, sidewall rubbers (Sg) each for forming an outer surface of respective one of the sidewall portions 3, bead rubbers (Bg) each for forming an outer surface of respective one of the bead portions 4, and the like are arranged. On the other hand, on an inner side of the carcass 6, an inner liner rubber (Lg) for keeping tyre inner pressure and the like are arranged.
The belt layer 7 in this embodiment is formed by two belt plies 7A and 7B in which belt cords are arranged at an angle in a range of from 15 to 45 degrees with respect to the tyre equator C, for example, and the belt plies 7A and 7B are overlapped in the tyre radial direction so that the belt cords of the belt ply 7A and the belt cords of the belt ply 7B cross each other. For the belt cords, steel, aramid, rayon or the like is suitably used, for example. By covering a plurality of the belt cords with the topping rubber, the belt plies 7A and 7B are formed.
The pneumatic tyre 1 in this embodiment is provided with a band layer 9 arranged on an outer side in the tyre radial direction of the belt layer 7. The band layer 9 includes a band ply 9A in which band cords of an organic fiber, nylon cords in this embodiment, are spirally wound at an angle of 10 degrees or less, preferably 5 degrees or less with respect to a tyre circumferential direction.
The pneumatic tyre 1 is provided with a noise damper 20 arranged on an inner cavity surface of the tread portion 2 and a damping rubber body 30 arranged inside of the tread portion 2.
The noise damper 20 is made of a porous sponge material. The sponge material is a cavernous porous structure body including not only a so-called sponge itself having interconnected cells formed by foamed rubber or a synthetic resin but also a web body formed of an animal fiber, a vegetable fiber, or a synthetic fiber and the like integrally interwoven, for example. Further, the "porous structure body" includes not only a body having the interconnected cells but also a body having closed cells. For the noise damper 20 in this embodiment, a sponge material made of polyurethane having interconnected cells is used.
In the sponge material as described above, the pores on the surface or inside of the sponge material convert vibration energy of the vibrating air into thermal energy, therefore, the vibration energy is consumed, thereby, sound (cavity resonance energy) is decreased, therefore, the running noise of the pneumatic tyre 1 is decreased. Further, the sponge material is easy to deform such as contraction, flexion, etc., therefore, deformation of the tyre during running is not substantially affected. Thereby, it is possible that deterioration of steering stability is prevented. Moreover, specific gravity of the sponge material is very small, therefore, it is possible that deterioration of weight balance of the tyre is prevented.

As the sponge material, synthetic resin sponge such as ether type polyurethane sponge, ester type polyurethane sponge, polyethylene sponge, and rubber sponge such as chloroprene rubber sponge (CR sponge), ethylene propylene rubber sponge (EDPM sponge), nitrile rubber sponge (NBR sponge) can be preferably and suitably used, and in particular, a polyurethane type or polyethylene type sponge including an ether type polyurethane sponge is preferred from the point of view of noise damping property, lightweight property, controllability of foaming, durability, and the like.

The noise damper 20 has an elongated belt-like shape having a bottom surface fixed to the inner cavity surface of the tread portion 2 and extends in the tyre circumferential direction. At this time, outer end portions in the circumferential direction of the noise damper may be in contact with each other to form a substantially annular shape, or the outer end portions may be spaced apart in the tyre circumferential direction.

The noise damper 20 has substantially the same cross-sectional shape at an arbitrary position in the tyre circumferential direction except for the outer end portions. In order to prevent collapse and deformation during running, it is preferred that the cross-sectional shape is a flat and horizontally elongated shape in which a height is smaller than a width in the tyre axial direction. In particular, as in this embodiment, it is preferred to have a concave groove 21 extending continuously in the tyre circumferential direction on a side of the radially inner surface. The concave groove 21 increases a surface area of the noise damper 20, therefore, it is possible that more resonance energy is absorbed, and heat dissipation is increased, therefore, it is possible that the temperature rise of the sponge material is suppressed.

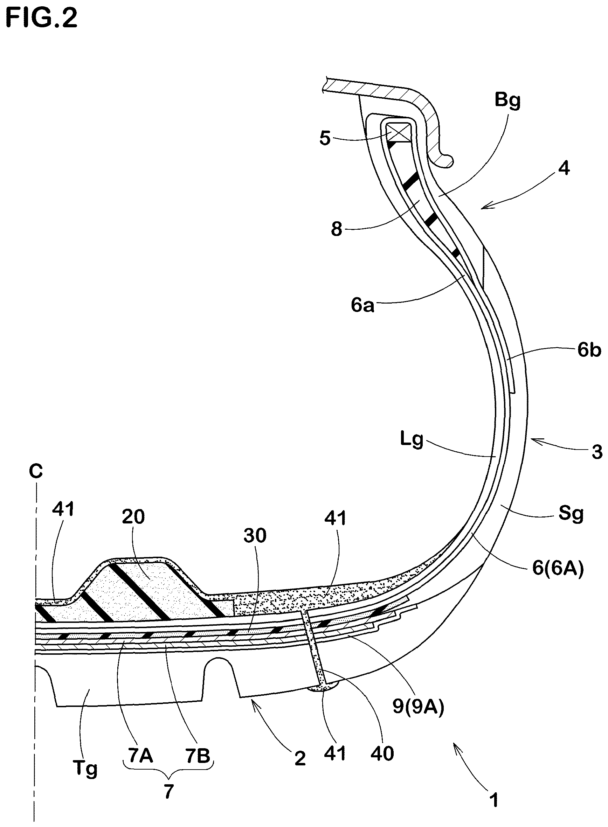

Fig. 2 is the pneumatic tyre 1 after puncture repair by using a puncture repair liquid. A through hole 40 formed in the tread portion 2 by running over a nail and the like is filled with puncture repair liquid 41, therefore, the through hole 40 is sealed.

Air permeability of the noise damper 20 measured in accordance with the Japanese Industrial Standard JIS-L1096 is 3.0 cm3/cm2/s or less. Thereby, permeation of the puncture repair liquid 41 into the noise damper 20, that is, absorption of the puncture repair liquid 41 by the noise damper 20 is suppressed, therefore, it is possible that puncture repair is performed on the tyre 1 with a small amount of the puncture repair liquid 41.

The damping rubber body 30 is formed by a rubber other than the topping rubber included in the carcass ply 6A and the belt ply 7A. A width w1 in the tyre axial direction of the damping rubber body 30 is in a range of from 60% to 130% of a width w2 in the tyre axial direction of the belt layer 7. It is more preferred that the width w1 of the damping rubber body 30 is in a range of from 70% to 120% of the width w2 of the belt layer 7. The damping rubber body 30 configured as such suppresses vibration of the tread portion 2 without contributing to the weight increase of the pneumatic tyre 1, and in particular contributes to the reduction of the running noise around 160 Hz.

The air permeability of the noise damper 20 in this embodiment is limited as described above, effect of suppressing the cavity resonance may be decreased as compared with a pneumatic tyre provided with a noise damper having better air permeability. However, the damping rubber body 30 in this embodiment is arranged inside the tread portion 2. The damping rubber body 30 is arranged between the carcass 6 and the belt layer 7. The width w1 in the tyre axial direction of the damping rubber body 30 is in a range of from 60% to 130% of the width w2 in the tyre axial direction of the belt layer. The damping rubber body 30 configured as such suppresses the vibration of the tread portion 2 without contributing to the weight increase of the pneumatic tyre 1, and in particular contributes to the reduction of the running noise around 160 Hz. Thereby, it is possible that the puncture repair is performed with a small amount of the puncture repair liquid while effectively suppressing the running noise.

Further, the air permeability of the noise damper 20 is limited as described above, therefore, the absorption of the puncture repair liquid 41 is suppressed, thereby, the puncture repair liquid 41 is distributed over the entire circumference in the tyre circumferential direction due to the rotation of the tyre during running, therefore, it is possible that deterioration of uniformity of the pneumatic tyre 1 after the puncture repair is suppressed. The term "uniformity" as used herein refers to the uniformity of the weight including the pneumatic tyre 1, the noise damper 20, and the puncture repair liquid 41. If such uniformity is impaired, it is possible that the running noise tends to be increased.

A thickness T1 in the tyre radial direction of the damping rubber body 30 is 0.3 mm or more. By setting the thickness T1 to 0.3 mm or more, the vibration of the tread portion 2 is more effectively suppressed. Further, by setting a maximum thickness in the tyre radial direction of the damping rubber body 30 to be in a range of from 4% to 20% of a maximum thickness of the tread portion 2, it is possible that the steering stability performance and the suppression of the running noise are easily achieved at the same time while suppressing weight increase of the pneumatic tyre 1.

The relationship between hardness H1 of the damping rubber body 30 and hardness H2 of the tread rubber (Tg) arranged on the outer side in the tyre radial direction of the belt layer 7 is $0.5 \leq H1/H2 \leq 1.0$. Here, "rubber hardness" is defined as rubber hardness measured in accordance with the Japanese Industrial Standard JIS-K6253 by using a type-A durometer under an environment of 23 degrees celsius. By the damping rubber body 30 having the hardness H1 described above, the vibration of the tread portion 2 is more effectively suppressed while securing the durability performance of the tread portion 2.

It is preferred that relationship between the hardness H1 of the damping rubber body 30 and hardness H3 of the topping rubber included in the carcass ply 6A and the belt ply 7A is $0.4 \leq H1/H3 \leq 1.2$. By the damping rubber body 30 having the hardness H1 described above, the vibration of the tread portion 2 is more effectively suppressed while securing the durability performance of the tread portion 2.

More specifically, it is preferred that the hardness H1 of the damping rubber body 30 is in a range of from 30 to 73 degrees. By the damping rubber body 30 having the hardness H1 configured as such, it is possible that the running noise is easily suppressed and the steering stability performance is improved while suppressing manufacturing cost of the pneumatic tyre 1. Further, more specifically, it is preferred that the hardness H2 of the tread rubber (Tg) is in a range of from 55 to 75 degrees. By the tread rubber (Tg) having the hardness H2 configured as such, the rigidity of the tread portion 2 is optimized, therefore, it is possible that the steering stability performance is improved.

It is preferred that density of the noise damper 20 is in a range of from 10 to 40 kg/m3. By the noise damper 20 having the density of 10 kg/m3 or more, it is possible that the puncture repair is performed with a small amount of the puncture repair liquid. By the noise damper 20 having the density of 40 kg/m3 or less, it is possible that the running noise in the vicinity of 250 Hz in particular is decreased without increasing the weight of the pneumatic tyre 1.

It is preferred that a volume v1 of the noise damper 20 is in a range of from 0.4% to 30% of a total volume v2 of a tyre inner cavity. The volume v1 of the noise damper 20 is an apparent total volume of the noise damper 20, which means the volume determined from the outer shape including the inner cells. The total volume V2 of the tyre inner cavity is to be approximately determined by the following formula with respect to a pneumatic tyre in the standard state in which the pneumatic tyre is mounted on the standard rim, inflated to the standard inner pressure, and loaded with no tyre load.

$$V2 = A \times \{(Di-Dr)/2+Dr\} \times \pi$$

In the above formula, "A" is a cross sectional area of the tyre inner cavity obtained by CT scanning a tyre/rim assembly in the standard state, "Di" is a maximum outer diameter of the inner cavity surface of the tyre in the standard state, "Dr" is a diameter of the rim, and "$\pi$" is the circumference ratio.

If the volume v1 is less than 0.4% of the total volume v2, it is possible that the vibration energy of the air is not sufficiently converted. If the volume v1 is more than 30% of the total volume v2, it is possible that the weight and the manufacturing cost of the pneumatic tyre 1 are increased and that the amount of the puncture repair liquid 41 used for the noise damper 20 is increased.

It is preferred that tensile strength of the noise damper 20 is in a range of from 70 to 115 kPa. If the tensile strength of the noise damper 20 is less than 70 kPa, it is possible that the durability performance of the noise damper 20 is deteriorated. If the tensile strength of the noise damper 20 is more than 115 kPa, when a foreign object such as a nail sticks into a region including the noise damper 20 of the tread portion 2, the noise damper 20 may be pulled by the foreign object, therefore, it is possible that the noise damper 20 comes off the inner cavity surface of the tread portion 2.

It is preferred that a loss tangent tan $\delta$ at 0 degrees Celsius of the tread rubber (Tg) is 0.4 or more. Thereby, wet grip performance of the pneumatic tyre 1 is improved. Therefore, for example, by setting the volume of the grooves formed in the ground contacting surface of the tread portion 2 to be small and the like, it is possible that the running noise is further decreased. It is preferred that the loss tangent tan $\delta$ at 70 degrees Celsius of the tread rubber (Tg) is 0.2 or less. Thereby, rolling resistance of the pneumatic tyre 1 is suppressed and deterioration of fuel efficiency due to inclusion of the noise damper 20 and the damping rubber body 30 is suppressed. Note that the loss tangent tan $\delta$ at 0 degrees Celsius and the loss tangent tan $\delta$ at 70 degrees Celsius were measured in accordance with the Japanese Industrial Standard JIS-K6394 by using a viscoelasticity spectrometer available from Iwamoto Quartz GlassLab Co., Ltd. under a condition of respective temperature (0 degrees Celsius or 70 degrees Celsius), a frequency of 10 Hz, an initial tensile strain of 10%, and an amplitude of dynamic strain of $\pm$ 2%.

It is preferred that a value of (1.4 $\times$ carbon black content (phr) + silica content (phr)) / sulfur content (phr) of the tread rubber (Tg) is 20 or more. Thereby, anti-wear performance is improved. Therefore, by setting depths of the grooves formed in the ground contacting surface of the tread portion 2 to be small and the like, it is possible that the running noise is further decreased, for example. Further, even when distribution of the puncture repair liquid is not uniform, occurrence of uneven wear is suppressed.

while detailed description has been made of the pneumatic tyre of the present invention, the present invention can be embodied in various forms without being limited to the illustrated embodiment.

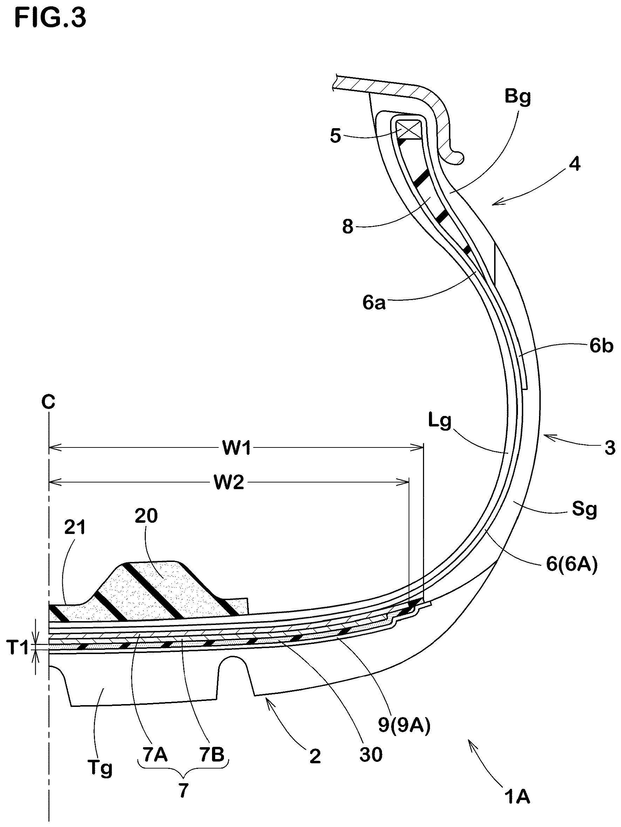

Fig. 3 shows a pneumatic tyre 1A according to another embodiment of the present invention, for example. The pneumatic tyre 1A is different from the pneumatic tyre 1 in that the damping rubber body 30 is disposed between the belt layer 7 and the band layer 9. The configuration of the pneumatic tyre 1 can be applied to the components of the pneumatic tyre 1A that are not described below. In the pneumatic tyre 1A, the vibration of the belt layer 7 and the band layer 9 is suppressed by the damping rubber body 30, therefore, the vibration of the tread portion 2 is suppressed eventually.

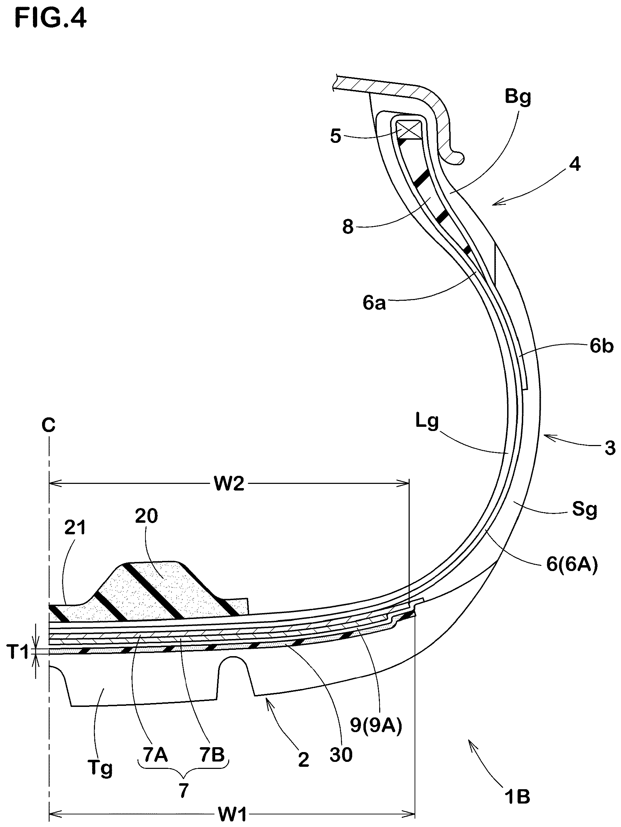

Fig. 4 shows a pneumatic tyre 1B according to yet another embodiment of the present invention. The pneumatic tyre 1B is different from the pneumatic tyre 1 in that the damping rubber body 30 is arranged on the outer side in the tyre radial direction of the band layer 9. The configuration of the pneumatic tyre 1 can be applied to the components of the pneumatic tyre 1B that are not described below. In the pneumatic tyre 1B, the vibration of the band layer 9 and the tread rubber (Tg) is suppressed by the damping rubber body 30, therefore, the vibration of the tread portion 2 is suppressed eventually.

**Working Examples**

Pneumatic tyres of size 165/65R18 having the basic structure shown in Fig. 1 were made by way of test according to the specification listed in Table 1, then the test tyres were tested for easiness of the puncture repair and noise performance. The specifications common to each of Examples and References were as follows.

(1) Tread rubber

· The formulations were as follows.

Natural rubber (TSR20): 15 (phr)
SBR 1 (bound styrene content: 28%, vinyl group content: 60%, glass transition point: -25 degrees Celsius, terminal modified): 45 (phr)
SBR 2 (bound styrene content: 35%, vinyl group content: 45%, glass transition point: -25 degrees Celsius, terminal modified): 25 (phr)
BR (BR150B available from Ube Industries, Ltd.): 15 (phr)
Carbon black N220: 5 (phr)
Silica (VN3): 35 (phr)
Silica (1115MP): 20 (phr)
Silane coupling agent Si266: 4 (phr)
Resin (SYLVARES SA85 available from Arizona Chemical Company): 8 (phr)
oil: 4 (phr)
wax: 1.5 (phr)
Age resistor (6C): 3 (phr)
Stearic acid: 3 (phr)
zinc oxide: 2 (phr)
Sulfur: 2 (phr)
vulcanization accelerator (NS): 2 (phr)
vulcanization accelerator (DPG): 2 (phr)

·The hardness of the tread rubber of the vulcanized tyre was 64 degrees.
· The maximum thickness of the tread rubber was 10 mm.

(2) Damping rubber body

· The formulations were as follows.

Natural rubber (TSR20): 65 (phr)
SBR (Nipol 1502): 35 (phr)
carbon black N220: 52 (phr)
oil: 15 (phr)
Stearic acid: 1.5 (phr)
zinc oxide: 2 (phr)
Sulfur: 3 (phr)
vulcanization accelerator (Cz): 1 (phr)

·The hardness of the damping rubber body of the vulcanized tyre was 58 degrees.
· The maximum thickness of the damping rubber body was 1 mm.

(3) Noise damper

The volume was 15% of the total volume of the tyre inner cavity.
· The density was 27 kg/m3.

(4) Belt cords

· The angle of the belt cords with respect to the tyre equator was 41 degrees.

The test methods were as follows.

< Easiness of puncture repair >

Each of the test tyres was mounted on a rim of 18×7JJ, inflated to the inner pressure of 320 kPa, and then punctured by rolling on a nail, repaired by using the puncture repair liquid for IMS (Instant Mobility System) available from Sumitomo Rubber Industries Ltd., and the amount of the puncture repair liquid used at that time was measured. The results are indicated by an index based on Example 1 being 100, wherein the larger the numerical value, the smaller the amount of the puncture repair liquid used, which is easier for the puncture repair.

< Noise performance >

Each of the test tyres was mounted on a rim of 18×7JJ and mounted on all wheels of a test vehicle (domestically produced rear-wheel drive vehicle with displacement of 2500 cc) under the condition of the inner pressure of 320 kPa. A total sound pressure (decibel) of frequencies in a range of from 100 to 200 Hz and in a range of from 200 to 300 Hz was measured by using a sound concentrating microphone attached to the center part of the backrest of the driver's seat while the test vehicle was driven on a road for measuring road noise (a rough asphalt surface road) at a speed of 60 km/h. The results are indicated by an index based on the Example 1 being 100, wherein the larger the numerical value, the smaller the running noise is, which is better.

Table 1. (1/2)

|  |  | Ref.1 | Ref.2 | Ref.3 | Ref.4 | Ref.5 | Ref.6 |
|---|---|---|---|---|---|---|---|
| Presence or Absence of Noise damper |  | absence | presence | absence | presence | presence | presence |
| Air permeability of Noise damper | [cm3/cm2/s] | --- | 4.0 | --- | 4.0 | 2.0 | 2.0 |
| Presence or Absence of Damping rubber body |  | absence | absence | presence | presence | presence | presence |
| width w1 of Damping rubber body/ width w2 of Belt layer | [%] | --- | --- | 100 | 100 | 50 | 140 |
| Easiness of puncture repair | [index] | 105 | 80 | 105 | 80 | 100 | 100 |
| Noise performance | [index] | 80 | 105 | 85 | 105 | 90 | 105 |

Table 1. (2/2)

|  |  | EX.1 | Ex.2 | EX.3 | Ex.4 | Ex.5 |
|---|---|---|---|---|---|---|
| Presence or Absence of Noise damper |  | presence | presence | presence | presence | presence |
| Air permeability of Noise damper | [cm3/cm2/s] | 2.0 | 3.0 | 2.0 | 2.0 | 2.0 |
| Presence or Absence of Damping rubber body |  | presence | presence | presence | presence | presence |
| width w1 of Damping rubber body/ width w2 of Belt layer | [%] | 100 | 100 | 60 | 70 | 130 |
| Easiness of puncture repair | [index] | 100 | 90 | 100 | 100 | 100 |
| Noise performance | [index] | 100 | 105 | 95 | 98 | 105 |

As is clear from the Table 1, it was confirmed that the easiness of the puncture repair and the noise performance were improved in a significantly good balance for the pneumatic tyres as the Examples 1 to 5 as compared with References 1 to 5. Note that it was confirmed that the tyre weight of Reference 6 was considerably increased (+5%) as compared with the Example 1.

Further, as shown in Table 2, pneumatic tyres as Examples 6 to 9 were made by way of test, and then the noise performance and the steering stability performance were tested. The test methods were as follows.

< Noise performance >

In-car noise was measured by the same method as described above. The results are indicated by an index based on the Example 8 being 100, wherein the larger the numerical value, the smaller the running noise is, which is better.

< Steering stability performance >

while the test vehicle used for the test of the noise performance was driven on a dry asphalt test course, characteristics related to steering response, rigid impression, grip, and the like were evaluated by the driver's feeling. The results are indicated by an evaluation point based on the Example 8 being 100, wherein a larger numerical value is better.

Table 2.

|  |  | Ex.6 | Ex. 7 | Ex.8 | Ex.9 |
|---|---|---|---|---|---|
| Presence or Absence of Noise damper |  | presence | presence | presence | presence |
| Air permeability of Noise damper | [cm3/cm2/s] | 2.0 | 2.0 | 2.0 | 2.0 |
| Presence or Absence of Damping rubber body |  | presence | presence | presence | presence |
| width w1 of Damping rubber body/ width w2 of Belt layer | [%] | 100 | 100 | 100 | 100 |
| Thickness T of Damping rubber body | [mm] | 0.2 | 0.3 | 0.5 | 0.7 |
| Noise performance | [index] | 98 | 99 | 100 | 103 |
| steering stability performance | [evaluation point] | 100 | 100 | 100 | 98 |

Furthermore, pneumatic tyres as Examples 10 to 14 as shown in Table 3 were made by way of test, and then the noise performance was tested and manufacturing cost was calculated. The test method and the calculation method were as follows.

< Noise performance >

The in-car noise was measured by the same method as described above. The results are indicated by an index based on the Example 12 being 100, wherein the larger the numerical value, the smaller the running noise is, which is better.

< Manufacturing cost >

Manufacturing cost required to manufacture a single tyre was calculated. The results are indicated by an index based on the Example 12 being 100, wherein the larger the numerical value, the smaller the manufacturing cost is, which is better.

Table 3.

|  |  | Ex.10 | Ex.11 | Ex.12 | Ex.13 | EX.14 |
|---|---|---|---|---|---|---|
| Presence or Absence of Noise damper |  | presence | presence | presence | presence | presence |
| Air permeability of Noise damper | [cm3/cm2/s] | 2.0 | 2.0 | 2.0 | 2.0 | 2.0 |
| Presence or Absence of Damping rubber body |  | presence | presence | presence | presence | presence |

(continued)

|  |  | Ex.10 | Ex.11 | Ex.12 | Ex.13 | EX.14 |
|---|---|---|---|---|---|---|
| width w1 of Damping rubber body/ width w2 of Belt layer | [%] | 100 | 100 | 100 | 100 | 100 |
| Hardness H1 of Damping rubber body/Hardness H2 of Tread rubber | | 0.4 | 0.5 | 0.7 | 1.0 | 1.2 |
| Noise performance | [index] | 96 | 98 | 100 | 102 | 102 |
| Manufacturing cost | [index] | 102 | 102 | 100 | 98 | 96 |

Furthermore, pneumatic tyres as Examples 15 to 19 as shown in Table 4 were made by way of test, and then the easiness of the puncture repair and the noise performance were tested. The test methods were as follows.

< Easiness of puncture repair >

The mount of the puncture repair liquid used was measured by the same method as described above. The results are indicated by an index based on Example 17 being 100, wherein the larger the numerical value, the smaller the amount of the puncture repair liquid used, which is easier for the puncture repair.

< Noise performance >

The in-car noise was measured by the same method as described above. The results are indicated by an index based on the Example 17 being 100, wherein the larger the numerical value, the smaller the running noise is, which is better.

Table 4.

|  |  | EX.15 | EX.16 | Ex.17 | EX.18 | EX.19 |
|---|---|---|---|---|---|---|
| Presence or Absence of Noise damper | | presence | presence | presence | presence | presence |
| Air permeability of Noise damper | [cm3/cm2/s] | 2.0 | 2.0 | 2.0 | 2.0 | 2.0 |
| Presence or Absence of Damping rubber body | | presence | presence | presence | presence | presence |
| width W1 of Damping rubber body/ width w2 of Belt layer | [%] | 100 | 100 | 100 | 100 | 100 |
| Density of Noise damper | [kg/m3] | 5 | 10 | 27 | 40 | 50 |
| Easiness of puncture repair | [index] | 95 | 97 | 100 | 103 | 103 |
| Noise performance | [index] | 103 | 103 | 100 | 97 | 95 |

Furthermore, pneumatic tyres as Examples 20 to 24 as shown in Table 5 were made by way of test, and then the easiness of the puncture repair and the noise performance were tested. The test methods were as follows.

< Easiness of puncture repair >

The mount of the puncture repair liquid used was measured by the same method as described above. The results are indicated by an index based on the Example 22 being 100, wherein the larger the numerical value, the smaller the amount of the puncture repair liquid used, which is easier for the puncture repair.

< Noise performance >

The in-car noise was measured by the same method as described above. The results are indicated by an index based on the Example 22 being 100, wherein the larger the numerical value, the smaller the running noise is, which is better.

Table 5.

|  | | Ex.20 | Ex.21 | Ex.22 | Ex.23 | Ex.24 |
|---|---|---|---|---|---|---|
| Presence or Absence of Noise damper | | presence | presence | presence | presence | presence |
| Air permeability of Noise damper | [cm3/cm2/s] | 2.0 | 2.0 | 2.0 | 2.0 | 2.0 |
| Presence or Absence of Damping rubber body | | presence | presence | presence | presence | presence |
| width W1 of Damping rubber body/ width w2 of Belt layer | [%] | 100 | 100 | 100 | 100 | 100 |
| volume v1/ Total volume v2 | [%] | 0.3 | 0.4 | 15.0 | 30.0 | 35.0 |
| Easiness of puncture repair | [index] | 103 | 103 | 100 | 97 | 95 |
| Noise performance | [index] | 95 | 97 | 100 | 103 | 103 |

Furthermore, the pneumatic tyres as Examples 25 to 29 as shown in Table 6 were made by way of test, and then the durability performance of the noise damper and separation resistance performance of the noise damper when a nail sticks were tested. The test methods were as follows.

< Durability performance of Noise damper >

Each of the test tyres was mounted on a rim of 18×7JJ and then, by using a drum testing machine, a running distance until the noise damper and its vicinity were damaged was measured under the conditions of the inner pressure of 320 kPa, the tyre load of 4.8 kN, and the speed of 80 km/h.
The results are indicated by an index based on the Example 27 being 100, wherein the larger the numerical value, the higher the durability performance is, which is better.

< Separation resistance performance of Noise damper when Nail sticks >

Each of the test tyres was mounted on a rim of 18×7JJ and punctured by rolling on a nail, then the damaged part was disassembled to measure the area of separation of the noise damper from the inner cavity surface of the tread portion due to the noise damper being pulled by the nail. The results are indicated by an index based on the Example 27 being 100, wherein the larger the numerical value, the higher the separation resistance performance is, which is better.

Table 6.

|  | | Ex.25 | Ex.26 | Ex.27 | Ex.28 | Ex.29 |
|---|---|---|---|---|---|---|
| Presence or Absence of Noise damper | | presence | presence | presence | presence | presence |
| Air permeability of Noise damper | [cm3/cm2/s] | 2.0 | 2.0 | 2.0 | 2.0 | 2.0 |
| Presence or Absence of Damping rubber body | | presence | presence | presence | presence | presence |
| width W1 of Damping rubber body/ width w2 of Belt layer | [%] | 100 | 100 | 100 | 100 | 100 |
| Tensile strength of Noise damper | [kPa] | 60 | 70 | 90 | 115 | 125 |
| Durability performance of Noise damper | [index] | 95 | 97 | 100 | 103 | 103 |
| separation resistance performance of Noise damper when Nail sticks | [index] | 103 | 103 | 100 | 97 | 95 |

**Description of Reference Signs**

| | |
|---|---|
| 1 | pneumatic tyre |
| 2 | tread portion |
| 3 | sidewall portion |
| 4 | bead portion |
| 5 | bead core |
| 6 | carcass |
| 20 | noise damper |
| 30 | damping rubber body |

**Claims**

1. A pneumatic tyre (1) comprising a carcass (6) extending between bead cores (5) of bead portions (2) via a tread portion (2) and sidewall portions (3), and a belt layer (7) arranged on an outer side in a tyre radial direction of the carcass (6) and inside of the tread portion (2), wherein

   a porous noise damper (20) made of polyurethane sponge or polyethylene sponge is arranged on an inner cavity surface of the tread portion (2), wherein air permeability of the noise damper (20) measured in accordance with the Japanese Industrial standard JIS-L1096 is 3.0 $cm^3/cm^2/s$ or less,
   **characterized by** a damping rubber body (30) being arranged inside of the tread portion (2), a width (W1) in a tyre axial direction of the damping rubber body (30) being in a range of from 60 % to 130 % of a width (W2) in the tyre axial direction of the belt layer (7) and a thickness (T1) in the tyre radial direction of the damping rubber body (30) being 0.3 mm or more,
   wherein a relationship between a hardness H1 of the damping rubber body (30) and a hardness H2 of a tread rubber (Tg) arranged on the outer side in the tyre radial direction of the belt layer (7) is $0.5 \leq H1/H2 \leq 1.0$, the rubber hardness being measured in accordance with JIS-K6253 by using a type-A durometer under an environment of 23 degrees celsius, and
   a maximum thickness in the tyre radial direction of the damping rubber body (30) is in a range of from 4 % to 20 % of a maximum thickness of the tread portion (2).

2. The pneumatic tyre (1) according to claim 1, wherein
   the damping rubber body (30) is arranged between the carcass (6) and the belt layer (7).

3. The pneumatic tyre (1) according to claim 1, wherein

   the pneumatic tyre (1) further comprises a band layer (9) arranged on the outer side in the tyre radial direction of the belt layer (7) and inside of the tread portion (2), and
   the damping rubber body (30) is arranged between the belt layer (7) and the band layer (9).

4. The pneumatic tyre (1) according to claim 1, wherein

   the pneumatic tyre (1) further comprises a band layer (9) arranged on the outer side in the tyre radial direction of the belt layer (7) and inside of the tread portion (2), and
   the damping rubber body (30) is arranged on the outer side in the tyre radial direction of the band layer (9).

5. The pneumatic tyre (1) according to any one of claims 1 to 4, wherein
   density of the noise damper (20) is in a range of from 10 to 40 kg/m3.

6. The pneumatic tyre (1) according to any one of claims 1 to 5, wherein
   a volume v1 of the noise damper (20) is in a range of from 0.4% to 30% of a total volume v2 of a tyre inner cavity.

7. The pneumatic tyre (1) according to any one of claims 1 to 6, wherein
   tensile strength of the noise damper (20) is in a range of from 70 to 115 kPa.

8. The pneumatic tyre (1) according to any one of claims 1 to 7, wherein

a loss tangent tan $\delta$ at 0 degrees Celsius of the tread rubber (Tg) arranged on the outer side in the tyre radial direction of the belt layer (7) is 0.4 or more, and

the loss tangent tan $\delta$ at 70 degrees Celsius of the tread rubber (Tg) is 0.2 or less,

wherein the loss tangent tan $\delta$ at 0 degrees Celsius and the loss tangent tan $\delta$ at 70 degrees Celsius are measured in accordance with the Japanese Industrial Standard JIS-K 6394 by using a viscoelasticity spectrometer available from Iwamoto Quartz GlassLab Co., Ltd. under a condition of respective temperature, a frequency of 10 Hz, an initial tensile strain of 10%, and an amplitude of dynamic strain of $\pm$ 2%.

9. The pneumatic tyre (1) according to any one of claims 1 to 8, wherein

the tread rubber (Tg) arranged on the outer side in the tyre radial direction of the belt layer (7) is a rubber composition having a value of 20 or more, the value being calculated by a following formula:

```
(1.4 x carbon black content (phr) + silica content
(phr)) / sulfur content (phr).
```

**Patentansprüche**

1. Luftreifen (1), umfassend eine Karkasse (6), die sich zwischen Wulstkernen (5) von Wulstabschnitten (2) über einen Laufflächenabschnitt (2) und Seitenwandabschnitte (3) erstreckt, und eine Gürtelschicht (7), die auf einer Außenseite in einer Reifenradialrichtung der Karkasse (6) und innen von dem Laufflächenabschnitt (2) angeordnet ist, wobei

ein poröser Geräuschdämpfer (20), der aus Polyurethanschwamm oder Polyethylenschwamm hergestellt ist, auf einer inneren Hohlraumoberfläche des Laufflächenabschnitts (2) angeordnet ist, wobei die Luftdurchlässigkeit des Geräuschdämpfers (20), gemessen gemäß dem japanischen Industriestandard JIS-L1096, 3,0 cm$^3$/cm$^2$/s oder weniger beträgt,

**gekennzeichnet durch** einen Dämpfungsgummikörper (30), der innen von dem Laufflächenabschnitt (2) angeordnet ist, wobei eine Breite (W1) in einer Reifenaxialrichtung des Dämpfungsgummikörpers (30) in einem Bereich von 60 % bis 130 % einer Breite (W2) in der Reifenaxialrichtung der Gürtelschicht (7) liegt und eine Dicke (T1) in der Reifenradialrichtung des Dämpfungsgummikörpers (30) 0,3 mm oder mehr beträgt,

wobei eine Beziehung zwischen einer Härte H1 des Dämpfungsgummikörpers (30) und einer Härte H2 eines Laufflächengummis (Tg), der auf der Außenseite in der Reifenradialrichtung der Gürtelschicht (7) angeordnet ist, $0,5 \leq H1/H2 \leq 1,0$ beträgt, wobei die Gummihärte gemäß JIS-K6253 unter Verwendung eines Typ-A-Durometers unter einer Umgebung von 23 Grad Celsius gemessen wird, und

eine maximale Dicke in der Reifenradialrichtung des Dämpfungsgummikörpers (30) in einem Bereich von 4 % bis 20 % einer maximalen Dicke des Laufflächenabschnitts (2) liegt.

2. Luftreifen (1) nach Anspruch 1, wobei
der Dämpfungsgummikörper (30) zwischen der Karkasse (6) und der Gürtelschicht (7) angeordnet ist.

3. Luftreifen (1) nach Anspruch 1, wobei

der Luftreifen (1) ferner eine Bandschicht (9) umfasst, die auf der Außenseite in der Reifenradialrichtung der Gürtelschicht (7) und innen von dem Laufflächenabschnitt (2) angeordnet ist, und
der Dämpfungsgummikörper (30) zwischen der Gürtelschicht (7) und der Bandschicht (9) angeordnet ist.

4. Luftreifen (1) nach Anspruch 1, wobei

der Luftreifen (1) ferner eine Bandschicht (9) umfasst, die auf der Außenseite in der Reifenradialrichtung der Gürtelschicht (7) und innen von dem Laufflächenabschnitt (2) angeordnet ist, und
der Dämpfungsgummikörper (30) auf der Außenseite in der Reifenradialrichtung der Bandschicht (9) angeordnet ist.

5. Luftreifen (1) nach einem der Ansprüche 1 bis 4, wobei
die Dichte des Geräuschdämpfers (20) in einem Bereich von 10 bis 40 kg/m3 liegt.

**6.** Luftreifen (1) nach einem der Ansprüche 1 bis 5, wobei
ein Volumen V1 des Geräuschdämpfers (20) in einem Bereich von 0,4 % bis 30 % eines Gesamtvolumens V2 eines Reifeninnenhohlraums liegt.

**7.** Luftreifen (1) nach einem der Ansprüche 1 bis 6, wobei
die Zugfestigkeit des Geräuschdämpfers (20) in einem Bereich von 70 bis 115 kPa liegt.

**8.** Luftreifen (1) nach einem der Ansprüche 1 bis 7, wobei

ein Verlusttangens tan $\delta$ bei 0 Grad Celsius des Laufflächengummis (Tg), der auf der Außenseite in der Reifenradialrichtung der Gürtelschicht (7) angeordnet ist, 0,4 oder mehr beträgt, und
der Verlusttangens tan $\delta$ bei 70 Grad Celsius des Laufflächengummis (Tg) 0,2 oder weniger beträgt,
wobei der Verlusttangens tan $\delta$ bei 0 Grad Celsius und der Verlusttangens tan $\delta$ bei 70 Grad Celsius gemäß dem japanischen Industriestandard JIS-K6394 unter Verwendung eines Viskoelastizitätsspektrometers, das von Iwamoto Quartz GlassLab Co., Ltd. erhältlich ist, unter einer Bedingung einer jeweiligen Temperatur (0 Grad Celsius oder 70 Grad Celsius), einer Frequenz von 10 Hz, einer anfänglichen Zugdehnung von 10 % und einer Amplitude der dynamischen Dehnung von $\pm$ 2 % gemessen sind.

**9.** Luftreifen (1) nach einem der Ansprüche 1 bis 8, wobei
der Laufflächengummi (Tg), der auf der Außenseite in der Reifenradialrichtung der Gürtelschicht (7) angeordnet ist, eine Gummizusammensetzung mit einem Wert von 20 oder mehr ist, wobei der Wert durch die folgende Formel berechnet wird:

$$(1,4 \times \text{Rußgehalt (phr)} + \text{Siliciumdioxidgehalt (phr)}) / \text{Schwefelgehalt (phr)}.$$

**Revendications**

**1.** Bandage pneumatique (1) comprenant une carcasse (6) s'étendant entre des âmes de talon (5) de portions de talon (2) via une portion formant bande de roulement (2) et des portions formant parois latérales (3), et une couche de ceinture (7) agencée sur un côté extérieur dans une direction radiale du pneumatique de la carcasse (6) et à l'intérieur de la portion formant bande de roulement (2), dans lequel

un amortisseur de bruit poreux (20) fait d'une éponge polyuréthane ou d'une éponge polyéthylène est agencé dans une surface de cavité interne de la portion formant bande de roulement (2), une perméabilité à l'air de l'amortisseur de bruit (20) mesurée selon la norme industrielle japonaise JIS-L1096 étant de 3,0 cm$^3$/cm$^2$/s ou moins,
**caractérisé par** un corps de caoutchouc d'amortissement (30) qui est agencé à l'intérieur de la portion formant bande de roulement (2), une largeur (W1) dans une direction axiale du corps de caoutchouc d'amortissement (30) étant dans une plage allant de 60 % à 130 % d'une largeur (W2) dans la direction axiale du pneumatique de la couche de ceinture (7) et une épaisseur (T1) dans la direction radiale du pneumatique du corps de caoutchouc d'amortissement (30) étant de 0,3 mm ou plus,
dans lequel une relation entre une dureté H1 du corps de caoutchouc d'amortissement (30) et une dureté H2 d'un caoutchouc de bande de roulement (Tg) agencé sur le côté extérieur dans la direction radiale du pneumatique de la couche de ceinture (7) est de $0,5 \leq H1/H2 \leq 1,0$, la dureté de caoutchouc étant mesurée selon JIS-K6253 à l'aide d'un duromètre de type A dans un environnement de 23 degrés C, et
une épaisseur maximum dans la direction radiale du pneumatique du corps de caoutchouc d'amortissement (30) est dans une plage allant de 4 % à 20 % d'une épaisseur maximum de la portion formant bande de roulement (2).

**2.** Bandage pneumatique (1) selon la revendication 1, dans lequel
le caoutchouc de corps d'amortissement (30) est agencé entre la carcasse (6) et la couche de ceinture (7).

**3.** Bandage pneumatique (1) selon la revendication 1, dans lequel

le bandage pneumatique (1) comprend en outre une couche de bande (9) agencée sur le côté extérieur dans la direction radiale du pneumatique de la couche de ceinture (7) et à l'intérieur de la portion formant bande de roulement (2), et
le corps de caoutchouc d'amortissement (30) est agencé entre la couche de ceinture (7) et la couche de bande (9).

4. Bandage pneumatique (1) selon la revendication 1, dans lequel

le bandage pneumatique (1) comprend en outre une couche de bande (9) agencée sur le côté extérieur dans la direction radiale du pneumatique de la couche de ceinture (7) et à l'intérieur de la portion formant bande de roulement (2), et
le corps de caoutchouc d'amortissement (30) est agencé sur le côté extérieur dans la direction radiale du pneumatique de la couche de bande (9).

5. Bandage pneumatique (1) selon l'une quelconque des revendications 1 à 4, dans lequel
une densité de l'amortisseur de bruit (20) est dans une plage allant de 10 à 40 kg/m$^3$.

6. Bandage pneumatique (1) selon l'une quelconque des revendications 1 à 5, dans lequel
un volume V1 de l'amortisseur de bruit (20) est dans une plage allant de 0,4 % à 30 % d'un volume total V2 d'une cavité intérieure de pneumatique.

7. Bandage pneumatique (1) selon l'une quelconque des revendications 1 à 6, dans lequel
une résistance à la traction de l'amortisseur de bruit (20) est dans une plage allant de 70 à 115 kPa.

8. Bandage pneumatique (1) selon l'une quelconque des revendications 1 à 7, dans lequel

une tangente de perte tan δ à 0 degré Celsius du caoutchouc de bande de roulement (Tg) agencé sur le côté extérieur dans la direction radiale du pneumatique de la couche de ceinture (7) est de 0,4 ou plus, et
une tangente de perte tan δ à 70 degrés Celsius du caoutchouc de bande de roulement (Tg) est de 0,2 ou moins,
dans lequel la tangente de perte tan δ à 0 degré Celsius et la tangente de perte tan δ à 70 degrés Celsius sont mesurées selon la norme industrielle japonaise JIS-K 6394 à l'aide d'un spectromètre de viscoélasticité disponible chez Iwamoto Quartz GlassLab Co., Ltd. dans une condition de température respective, une fréquence de 10 Hz, une contrainte de traction initiale de 10 %, et une amplitude de contrainte dynamique de ± 2 %.

9. Bandage pneumatique (1) selon l'une quelconque des revendications 1 à 8, dans lequel
le caoutchouc de bande de roulement (Tg) agencé sur le côté extérieur dans la direction radiale du pneumatique de la couche de ceinture (7) est une composition de caoutchouc ayant une valeur de 20 ou plus, la valeur étant calculée par une formule suivante :

$$(1,4 \times \text{teneur en noir de carbone (phr)} + \text{teneur en silice (phr))} / \text{teneur en soufre (phr)}.$$

# FIG.1

# FIG.2

# FIG.3

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4960626 B
- EP 3431309 A1
- US 20100038005 A1
- JP H07144508 A
- EP 0620129 A1